Europäisches Patentamt

European Patent Office

Office européen des brevets

(19)

(11) Veröffentlichungsnummer: **0 029 108**
**B1**

(12) EUROPÄISCHE PATENTSCHRIFT

(45) Veröffentlichungstag der Patentschrift: **18.01.84**

(51) Int. Cl.³: **H 04 B 3/46**

(21) Anmeldenummer: **80106049.2**

(22) Anmeldetag: **06.10.80**

(54) Verfahren und Anordnung zur adressenfreien Fehlerortung mittels Schleifenschluss in einer Nachrichtenübertragungsstrecke.

(30) Priorität: **19.10.79 DE 2942410**

(43) Veröffentlichungstag der Anmeldung:
**27.05.81 Patentblatt 81/21**

(45) Bekanntmachung des Hinweises auf die Patenterteilung:
**18.01.84 Patentblatt 84/3**

(84) Benannte Vertragsstaaten:
**AT BE CH FR GB IT LI NL SE**

(56) Entgegenhaltungen:
**DE - A - 2 352 194**
**DE - A - 2 653 178**
**DE - A - 2 653 201**
**DE - A - 2 703 930**
**DE - B - 2 201 330**

(73) Patentinhaber: **SIEMENS AKTIENGESELLSCHAFT**
**Berlin und München Wittelsbacherplatz 2**
**D-8000 München 2 (DE)**

(72) Erfinder: **Dömer, Josef, Ing. grad.**
**Flossgatter 18**
**D-8021 Hohenschäftlarn (DE)**
Erfinder: **Thanhäuser, Gerhard, Dipl.-Ing.**
**Mozartstrasse 9**
**D-8905 Mering (DE)**
Erfinder: **Lewin, Horst, Dipl.-Ing.**
**Kehrstrasse 27**
**D-8506 Lauf a.d. Pegnitz (DE)**
Erfinder: **Hammer, Gerhard, Dipl.-Ing.**
**Kurze Strasse 2**
**D-6707 Schiffertstadt (DE)**

Courier Press, Leamington Spa, England.

# 0 029 108

## Verfahren und Anordnung zur adressenfreien Fehlerortung mittels Schleifenschluß in einer Nachrichtenübertragungsstrecke

Die Erfindung betrifft ein Verfahren zur adressenfreien Fehlerortung mittels Schleifenschluß in einer Nachrichtenübertragungsstrecke für die Übertragung digitaler Nachrichtensignale von einer ortenden Endstelle aus über wenigstens einen die Übertragungssignale beider Übertragungsrichtungen regenerierenden und/oder verstärkenden Zwischenregenerator, der einen Schleifenschlußschalter zur Verbindung des Ausgangs des Regenerators für die eine Übertragungsrichtung mit dem Eingang des Regenerators für die Gegenrichtung und einen Umschalter enthält, der den Eingang des Regenerators der Gegenrichtung mit der geschalteten Schleife oder mit dem Ausgang der Übertragungsstrecke der Gegenrichtung verbindet, bei dem während des gesamten Fehlerortungsvorganges von der ortenden Endstelle ein einziges Ortungssignal ausgesendet wird, und eine Anordnung zur Durchführung dieses Verfahrens.

Nachrichtenübertragungsstrecken mit größerer räumlicher Ausdehnung enthalten zwischen den beiden Endstellen ein mittels Kupferkabel oder Lichtwellenleiterkabel aufgebautes Übertragungsmedium, in das in bestimmten räumlichen Abständen regenerierende und/oder verstärkende Zwischenregeneratoren eingefügt sind. Für eine zweiseitige Nachrichtenverbindung enthalten diese Zwischenregeneratoren in der Regel einen Regenerator für die eine und einen Regenerator für die andere Übertragungsrichtung. Bei der Übertragung von analogen Signalen dienen die Regeneratoren zur Verstärkung des Übertragungssignals und zu dessen Entzerrung im Hinblick auf den Frequenzgang des Übertragungskabels. Bei digitalen Signalen dienen die Regeneratoren zur Wiederherstellung der Amplitude, der Form und er zeitlichen Lage der einzelnen Impulse des Übertragungssignals. In beiden Fällen enthält jeder der Regeneratoren einen Entzerrer zur Kompensation des Kabelfrequenzganges mit einer in Abhängigkeit von der Amplitude des Entzerrerausgangssignals erfolgenden Regelung des Verstärkungsgrades. Zusätzlich enthalten die Regeneratoren für die Übertragung digitaler Signale eine Takt- oder Trägerrückgewinnungsschaltung, durch die aus den empfangenen Impulsen ein lokales Taktsignal erzeugt wird. Häufig wird dazu eine bekannte Phasenregelschleife verwendet.

In den Endstellen der Nachrichtenübertragungsstrecke sind Überwachungseinrichtungen vorgesehen, die beispielsweise bei digitalen Signalen diese auf Verletzungen des bei der Bildung dieser digitalen Signale angewandten Codes hin untersuchen. Nach Feststellung einer Störung der Nachrichtenübertragung werden von einer ortenden Endstelle aus die einzelnen Zwischenregeneratoren und damit auch die jeweils zwischen den Zwischenregeneratoren angeordneten Kabelabschnitte einzeln untersucht. Zu diesem Zweck wird von der ortenden Endstelle aus ferngesteuert in den Zwischenregeneratoren nacheinander jeweils eine Verbindung vom Ausgang des Regenerators in Ortungsrichtung zum Eingang des Regenerators für die Gegenrichtung geschlossen und über diese Schleife ein Ortungssignal übertragen. Durch Vergleich des ausgesandten mit dem empfangenen Ortungssignal in der ortenden Endstelle kann die Qualität der Übertragungsstrecke untersucht werden.

Neben den Verfahren, bei denen jeder Zwischenregenerator eine eigene Adresse hat und deshalb gezielt angesteuert werden kann, werden wegen der Notwendigkeit einer individuellen Einstellung dieser Adresse häufig adressenfreie Fehlerortungsverfahren verwendet, bei denen von der ortenden Endstelle aus nacheinander die Schleifenschlüsse in den einzelnen Zwischenregeneratoren gebildet werden. Dabei kann es vorkommen, daß in Ortungsrichtung gesehen, in den auf den gerade untersuchten Zwischenregenerator folgenden Zwischenregeneratoren für längere Zeit kein Signal empfangen werden kann. Dies führt aber dazu, daß in diesen Zwischenregeneratoren die automatische Verstärkungsregelung den Entzerrer auf dessen größten Verstärkungsgrad regelt, außerdem kann es zu einer erheblichen Fehlsynchronisation in der Taktrückgewinnungsschaltung kommen. Bei anschließendem Aussenden des den Schleifenschluß bewirkenden Signals erfolgt dann zunächst ein Einschwingen bzw. Einregelvorgang, bei dem undefinierte Zustände auftreten können, die zu Störungen führen können.

Die Aufgabe der Erfindung besteht darin, ein Verfahren der eingangs erwähnten Art anzugeben, bei dem die auf die jeweils untersuchten Zwischenregeneratoren folgenden Zwischenregeneratoren im Betriebszustand verbleiben.

Erfindungsgemäß wird die Aufgabe durch ein Verfahren der eingangs erwähnten Art gelöst, bei dem ausgehend vom Betriebszustand das Ortungssignal ausgesendet wird, das periodisch eine kurzzeitige Kennung enthält, daß nach einer Erkennungszeit alle dieses Ortungssignal empfangenden Zwischenregeneratoren in einen Vorbereitungszustand übergehen und dabei jeweils ein Zustandszähler freigegeben wird und von diesen Zwischenregeneratoren ein derart verändertes Ortungssignal ausgesendet wird, daß die darin weiterhin enthaltene Kennung für einen empfangenden Zwischenregenerator nicht mehr als Kennung erkennbar ist und dieser im Entzerrerregelbereich und im Synchronisationsbereich der Phasenregelschleife bleibt, daß die in den Vorbereitungszustand geschalteten, das veränderte Ortungssignal empfangenden Zwischenregeneratoren nach einer etwa der Erkennungszeit entsprechenden Haltezeit in den Betriebszustand zurückschalten, daß nach Ablauf der Haltezeit für eine gegenüber der Erkennungs- und Haltezeit kurze Weiterschaltzeit der in dem Vorbereitungszustand verbliebene Zwischenregenerator in den Schleifenschlußzustand geschaltet wird und dabei der Eingang des Regenerators der Gegenrichtung von seinem vorgeschalteten Signalweg getrennt wird, außerdem an den in Ortungsrichtung folgenden Zwischenregenerator das unveränderte Ortungssignal ausgesendet wird, der Zustandszähler weitergeschaltet wird und der geschaltete Schleifenschluß für die die Erkennungszeit überschreitende Dauer des unveränderten Ortungssignals bestehen bleibt, daß bei einer erneuten Veränderung des Ortungssignals für die Weiterschaltzeit der Zustandszähler im Zwischenregenerator mit Schleifenschluß in eine Endstellung geschaltet wird, der Schleifenschluß in diesem Zwischenregenerator aufgehoben wird und das Ortungssignal mit Kennung unverändert an den in Ortungsrichtung nachfolgenden Zwischenregenerator übertragen und dieser in den Schleifenschluß geschaltet wird.

Die Vorteile des erfindungsgemäßen Verfahrens bestehen insbesondere darin, daß das verwendete Fehlerortungssignal mit vergleichsweise geringem Aufwand erzeugt werden kann und daß auch für die Veränderung dieses Ortungssignals in dem im Vorbereitungszustand befindlichen Zwischenregenerator nur ein vergleichsweise geringer Aufwand erforderlich ist. Weitere Vorteile des erfindungsgemäßen Verfahrens ergeben sich dadurch, daß relativ große Freizügigkeit hinsichtlich der verwendbaren Kennungssignale besteht und deshalb eine optimale Anpassung an die speziellen Gegebenheiten der jeweils betrachteten Nachrichtenübertragungsstrecke möglich ist.

Bevorzugte Varianten des erfindungsgemäßen Verfahrens sind in den Patentansprüchen 2 bis 7 beschrieben.

Eine Anordnung zur Durchführung des erfindungsgemäßen Verfahrens ist im Patentanspruch 8 näher beschrieben.

Die Erfindung soll im folgenden anhand der Zeichnung näher erläutert werden. In der Zeichnung zeigt.

Fig. 1 die Darstellung eines verwendeten Ortungssignals,
Fig. 2 einen PCM-Regenerator mit Ortungsschleifenschaltung im Prinzip und
Fig. 3 die Steuereinheit eines PCM-Regenerators nach Fig. 2.

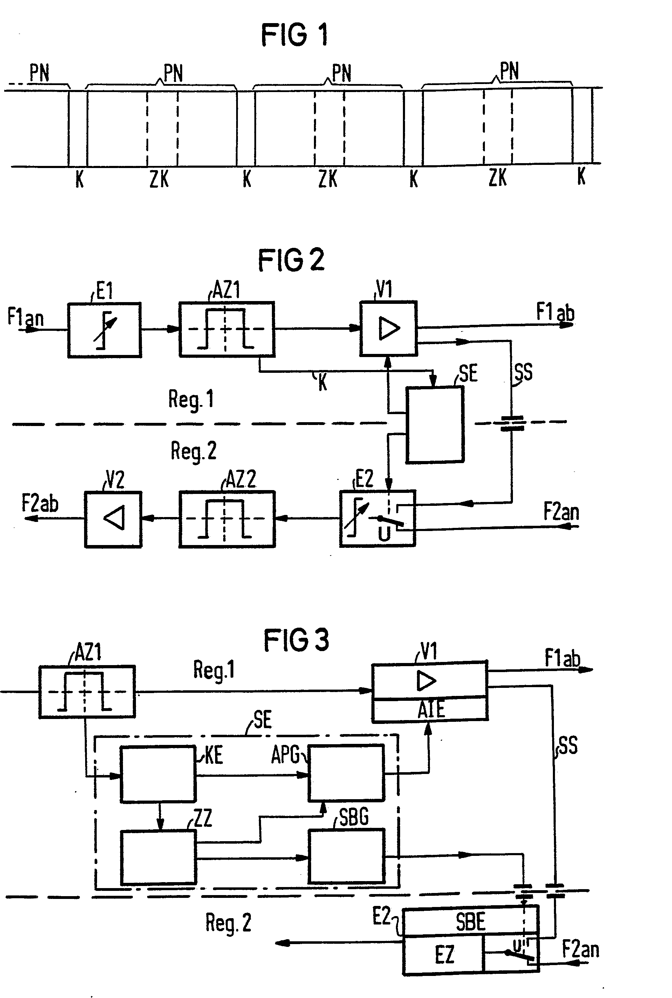

Das in der Fig. 1 dargestellte Fehlerortungssignal besteht aus einer mit PN bezeichneten Pseudozufallsfolge, in die periodisch eine Kennung eingeblendet ist. Dieses Ortungssignal wird in einer Nachrichtenübertragungsstrecke für in einem ternären Code vorliegende digitale Signale verwendet. Als Kennung wird eine Kombination von aufeinanderfolgenden Ternärzeichen verwendet, die im normalen Betriebszustand nicht vorkommen. Die tatsächlichen Verhältnisse sind dabei in der Fig. 1 aus zeichentechnischen Gründen nicht darstellbar, da die Dauer der Kennung im vorliegenden Falle nur ein Tausendstel der Dauer des Ortungssignals entspricht.

Zusätzlich ist in der Fig. 1 die zusätzliche Zeichenkombination ZK gestrichelt dargestellt. Diese zusätzliche Zeichenkombination wird von dem in den Vorbereitungszustand geschalteten Zwischenregenerator in das ausgesendete Ortungssignal mit der Periode der Kennung K eingeblendet. Dadurch tritt anstelle eines Signals mit einer Periode entsprechend der Kennung ein Signal mit der doppelten Wiederholfrequenz gegenüber dem der Kennung auf, so daß die dieses Signal empfangenden Zwischenregeneratoren keine Kennung feststellen können, im Hinblick auf die sehr kurze Dauer der eingefügten Kennung und der eingefügten zusätzlichen Zeichenkombination im Entzerrerregelbereich und im Synchronisationsbereich der Phasenregelschleife bleiben. Die Dauer der zusätzlichen Zeichenkombination kann dabei gleich der Dauer der Kennung sein; zur leichteren Einblendung kann die Dauer der zusätzlichen Zeichenkombination gegenüber der Dauer der Kennung etwa zehnfach länger sein.

In der Fig. 2 ist mit Reg1 ein erster Regenerator bezeichnet, der in Ortungsrichtung in dem in der Fig. 2 dargestellten Zwischenregenerator angeordnet ist. Der Regenerator Reg2 ist entsprechend in Gegenrichtung angeordnet. Beide Regeneratoren enthalten eingangsseitig einen geregelten Entzerrer E1 bzw. E2, die an das Streckenende F1an bzw. F2an angeschlossen sind. Mit den Ausgängen der Entzerrer sind die Eingänge zweier Amplituden- und Zeitentscheider AZ1, AZ2 angeschlossen, deren Ausgänge sind über jeweils einen Impulsverstärker V1 bzw. V2 mit der abgehenden Strecke F1ab bzw. F2ab verbunden.

In dem Amplituden- und Zeitentscheider AZ1 des ersten Regenerators Reg1 ist zusätzlich eine Separationsschaltung vorgesehen, die bei Auftreten einer Kennung K im empfangenen Ortungssignal diese an eine Steuereinheit SE abgibt, die beiden Regeneratoren gemeinsam ist. Diese Steuereinheit steuert den eigentlichen Schleifenschluß. Der Schleifenschluß wird zwischen einem Ausgangsanschluß des ersten Verstärkers V1 des in Ortungsrichtung wirkenden ersten Regenerators Reg1 und dem Eingang des Entzerrers E2 des zweiten, in Gegenrichtung wirkenden Regenerators Reg2 geschlossen. Zu diesem Zweck sind die Anschlüsse beider Bauteile fest verbunden und im Entzerrer E2 ein zusätzlicher Umschalter U angeordnet, der durch die Steuereinheit SE gesteuert, den Eingang des eigentlichen Entzerrers vom Anschluß F2an der Kabelstrecke auf den Anschluß der Ortungsschleife SS umschaltet.

3

| Ortungssignal (mit Kennung) | Zwischenregenerator | | | | | | | | |
|---|---|---|---|---|---|---|---|---|---|
| | 1 | 2 | 3 | 4 | - - - - - | N−1 | N | N+1 | N+2 |
| aus | B | B | B | B | | B | B | B | B |
| ein | V | B | B | B | | B | B | B | B |
| 1. Schaltimpuls | S | V | B | B | | | | | |
| 2. Schaltimpuls | ES | S | V | B | | | | | |
| 3. Schaltimpuls | ES | ES | S | V | | | | | |
| | | | | | | | | | |
| (N−1). Schaltimpuls | ES | ES | ES | ES | | S | V | B | B |
| N. Schaltimpuls | ES | ES | ES | ES | | ES | S | V | B |
| (N+1). Schaltimpuls | ES | ES | ES | ES | | ES | ES | S | V |
| (N+2). Schaltimpuls | ES | ES | ES | ES | | ES | ES | ES | S |

V — Vorbereitungszustand
S — Schleifenschluß
ES — Endzustand
B — Betriebszustand

Zur Erläuterung des Ablaufs einer Fehlerortung mittels Schleifenschluß sei außerdem die Tabelle herangezogen. Ausgegangen werden soll von einer im Betriebszustand befindlichen Übertragungsstrecke für digitale Signale, bei der ein Leitungsendgerät Streckenausfall gemeldet hat. Daraufhin wird ein Ortungsgerät mit dem Eingang der Übertragungsstrecke verbunden, das einem der beiden Leitungsendgeräte zugeordnet ist.

Auf den Empfang des Ortungssignals der Kennung hin gehen zunächst alle Zwischenregeneratoren der Übertragungsstrecke nach der Erkennungszeit T1 in den Vorbereitungszustand V. In diesem Vorbereitungszustand wird von jedem Zwischenregenerator im Ortungsrichtung ein entsprechend der Fig. 1 verändertes Ortungssignal abgegeben, so daß die auf den ersten Zwischenregenerator folgenden Zwischenregeneratoren das Ortungssignal nicht weiter empfangen und nach einer etwa der Erkennungszeit entsprechenden Haltezeit in den Betriebszustand zurückschalten. In diesem Betriebszustand empfangen die Regeneratoren weiterhin ein Signal, so daß die Entzerrer im Regelbereich bleiben und die beispielsweise als Phasenregelschleife aufgebaute Taktrückgewinnungsschaltung in ihrem Synchronisationsbereich verbleibt.

Nach Ablauf der Haltezeit ist also nur der erste Zwischenregenerator in den Vorbereitungszustand geschaltet. Auf einen ersten Schaltimpuls hin, der in einer Unterbrechung des Ortungssignals für eine Dauer T2 besteht, die kleiner als die Haltezeit ist, wird der erste Zwischenregenerator in den Schleifenschluß geschaltet. Dabei ist die Ortungsschleife SS zwischen Ausgang des ersten Verstärkers V1 und Eingang des zweiten Entzerrers E2 geschlossen und der Umschalter so geschaltet, daß die Ortungsschleife SS gegebenenfalls über ein Dämpfungsnetzwerk mit dem Eingang der eigentlichen Entzerrerschaltung verbunden ist. Außerdem wird vom Ausgang des ersten Verstärkers V1 an die Strecke das unveränderte Ortungssignal abgegeben. Nach der Erkennungszeit T1 schalten die nachgeschalteten Zwischenregeneratoren in den Vorbereitungszustand, nach der entsprechenden Haltezeit verbleibt aber nur der zweite Zwischenregenerator in diesem Vorbereitungszustand V. Während dieser Zeit erfolgt bereits die Prüfung der ersten Schleife auf das Auftreten von Übertragungsfehlern. Die Prüfzeit kann dabei beliebig ausgedehnt werden.

Nach erfolgter Prüfung erfolgt ein weiterer Schaltimpuls. Durch diesen Schaltimpuls wird der Schleifenschluß im ersten Zwischenregenerator aufgehoben und dieser in einen Endzustand ES geschaltet. Außerdem wird durch diesen zweiten Schaltimpuls der zweite Zwischenregenerator vom Vorbereitungszustand in den Schleifenschluß geschaltet und außerdem der dritte Zwischenregenerator in den Vorbereitungszustand V. In entsprechender Weise wird durch jeweils einen Schaltimpuls der Schleifenschluß in Ortungsrichtung zu dem jeweils nächsten Zwischenregenerator weitergeschaltet.

Die im Hinblick auf den Schleifenschluß wichtigsten Teile eines Zwischenregenerators nach der Fig. 2 sind in der Fig. 3 detaillierter dargestellt. Mit einem Ausgang des Amplituden- und Zeitentscheiders AZ1 des ersten Regenerators ist der eine Eingang einer Steuereinheit verbunden, die einen mit diesem Eingang unmittelbar verbundenen Kennungssignalempfänger KE, einen Austastimpulsgenerator APG und einen Zustandszähler ZZ enthält, die mit Ausgängen des Kennungssignalempfängers KE verbunden sind. Die Steuereinheit SE enthält weiterhin einen Schleifenbefehlsgeber SBG, der mit einem Ausgang des Zustandszählers ZZ verbunden ist, ein anderer Ausgang dieses Zustandszählers ist mit einem weiteren Eingang des Austastimpulsgenerators APG verbunden.

An den Ausgang des Austastimpulsgenerators APG ist eine im ersten Verstärker V1 zusätzlich angeordnete Austastimpulseinblendung AIE angeschaltet. Mit dem Ausgang des Schleifenbefehlsgebers SBG ist der Eingang eines Schleifenbefehlsempfängers SBE verbunden, an dessen Ausgang eine Schaltung zur Ortungssignaleinkopplung OSE angeschlossen ist. Schleifenbefehlsempfänger SBE und Schaltung zur Ortungssignaleinkopplung OSE sind Teile des zweiten Entzerrers E2.

Zur Erläuterung der Wirkungsweise der Schaltung nach der Fig. 3 sei angenommen, daß sich diese im Betriebszustand befindet und daß von einem Ortungsgerät ein Ortungssignal an die Übertragungsstrecke abgegeben wird und von diesem Zwischenregenerator empfangen wird. Nach Empfang der Kennung wird nach der Erkennungszeit T1 der Zustandszähler ZZ freigegeben und der Austastimpulsgenerator APG gestartet, der außerdem vom Kennungssignalempfänger KE ein Startsignal erhält. Daraufhin gibt der Austastimpulsgenerator APG periodisch Steuerimpulse an die Schaltung zur Austastimpulseinblendung AIE im ersten Verstärker V1 ab, wodurch in das von dem ersten Verstärker abgegebene Ortungssignal eine zusätzliche Zeichenkombination eingefügt wird.

Beim Auftreten des ersten Schaltimpulses entsprechend der erläuterten Tabelle wird vom Kennungssignalempfänger ein Schaltimpuls an den Zustandszähler ZZ abgegeben und dieser in einen weiteren, den Schleifenzustand geschaltet. Im Schleifenzustand gibt der Zustandszähler ZZ den Schleifenbefehlsgeber SBG frei, während der Austastimpulsgenerator gesperrt wird. Durch die Freigabe wird der Schleifenbefehlsgeber SBG veranlaßt, an den Schleifenbefehlsempfänger SBE einen Schleifenbefehl abzugeben, durch den der Schleifenbefehlsempfänger SBE den Umschalter U im zweiten Entzerrer in die Schleifenstellung schaltet. Die Anordnung mittels Schleifenbefehlsgebers und Schleifenbefehlsempfängers ist hierbei nötig, da sich beide auf unterschiedlichem Potential befinden.

Die Fernspeisung der Zwischenregeneratoren erfolgt jeweils über die für die Übertragung der digitalen Signale verwendeten Kabelstrecken, so daß zwischen dem ersten Regenerator Reg1 und dem zweiten Regenerator Reg2 das Fernspeisepotential liegt. Durch die geschilderte Anordnung wird erreicht, daß zusätzlich zur Schleife ein weiterer spannungsfester Übergang zwischen beiden

# 0 029 108

Regeneratoren notwendig ist und dieser spannungsfeste Übergang hinsichtlich seiner Signalübertragungseigenschaften vergleichsweise unkritisch ist.

Durch die Sperrung des Austastimpulsgenerator APG wird auch die Schaltung zur Austastimpulseinblendung im ersten Verstärker V1 gesperrt. Dadurch wird vom ersten Verstärker V1 das Ortungssignal unverändert an den nächsten Zwischenregenerator abgegeben, so daß dieser im Vorbereitungszustand verbleibt.

Auf einen weiteren Schaltimpuls hin gibt der Kennungssignalempfänger KE einen erneuten Steuerimpuls an den Zustandszähler, durch den dieser in einem Endzustand geschaltet wird. In diesem Endzustand sind der Austastimpulsgenerator APG und der Schleifenbefehlsgeber SBG gesperrt und der Umschalter U ist wieder in seiner Ausgangsstellung zurück. Damit ist der Schleifenschluß in diesem Zwischenregenerator beendet und im nächsten Zwischenregenerator geschaltet. In diesem Zwischenregenerator laufen dann ebenfalls die geschilderten Steuervorgänge ab. Im Hinblick auf die Einsparung eines der beiden spannungsfesten Übergänge zwischen den beiden Regeneratoren ist es auch möglich, im Schleifenschlußweg auf der Potentialseite des zweiten Regenerators eine Erkennungsschaltung für das Ortungssignal mit Kennung anzuordnen und von dieser Erkennungsschaltung aus den Schleifenschlußumschalter U zu steuern. Auf der Potentialseite des Regenerators 1 muß dann das Ortungssignal im Schleifenschlußweg SS vom Zustandszähler ZZ aufgetrennt bzw. durchgeschaltet werden.

**Patentansprüche**

1. Verfahren zur adressenfreien Fehlerortung mittels Schleifenschluß in einer Nachrichtenübertragungsstrecke für die Übertragung digitaler Nachrichtensignale von einer ortenden Endstelle aus über wenigstens einen die Übertragungssignale beider Übertragungsrichtungen regenerierenden und/oder verstärkenden Zwischenregenerator, der einen Schleifenschlußschalter zur Verbindung des Ausgangs des Regenerators für die eine Übertragungsrichtung mit dem Eingang des Regenerators für die Gegenrichtung und einen Umschalter enthält, der den Eingang des Regenerators der Gegenrichtung mit der geschalteten Schleife oder mit dem Ausgang der Übertragungsstrecke der Gegenrichtung verbindet, bei dem während des gesammten Fehlerortungsvorganges von der ortenden Endstelle ein einziges Ortungssignal ausgesendet wird, dadurch gekennzeichnet, daß, ausgehend vom Betriebszustand das Ortungssignal ausgesendet wird, das periodisch eine kurzzeitige Kennung enthält, daß nach einer Erkennungszeit (T1) alle dieses Ortungssignal empfangenden Zwischenregeneratoren in einen Vorbereitungszustand übergehen und dabei jeweils ein Zustandszähler (ZZ) freigegeben wird und von diesen Zwischenregeneratoren ein derart verändertes Ortungssignal ausgesendet wird, daß die darin weiterhin enthaltene Kennung für einen empfangenden Zwischenregenerator nicht mehr als Kennung erkennbar ist und dieser im Entzerrerregelbereich und im Synchronisationsbereich der Phasenregelschleife bleibt, daß die in den Vorbereitungszustand geschalteten, das veränderte Ortungssignal empfangenden Zwischenregeneratoren nach einer etwa der Erkennungszeit (T1) entsprechenden Haltezeit in den Betriebszustand zurückschalten, daß nach Ablauf der Haltezeit bei Unterbrechung der Aussendung des Ortungssignals für eine gegenüber der Erkennungs- und Haltezeit kurze Weiterschaltzeit (T2) der in dem Vorbereitungszustand verbliebene Zwischenregenerator in den Schleifenschlußzustand geschaltet wird und dabei der Eingang des Regenerators der Gegenrichtung von seinem vorgeschalteten Signalweg getrennt wird, außerdem an den in Ortungsrichtung folgenden Zwischenregenerator das unveränderte Ortungssignal ausgesendet wird, der Zustandszähler (ZZ) weitergeschaltet wird und der geschaltete Schleifenschluß für die die Erkennungszeit (T1) überschreitende Dauer des unveränderten Ortungssignals bestehen bleibt, daß bei einer erneuten Veränderung des Ortungssignals für die Weiterschaltzeit (T2) der Zustandszähler (ZZ) im Zwischenregenerator mit Schleifenschluß in eine Endstellung geschaltet wird, der Schleifenschluß in diesem Zwischenregenerator aufgehoben wird und das Ortungssignal mit Kennung unverändert an den in Ortungsrichtung nachfolgenden Zwischenregenerator übertragen und dieser in den Schleifenschluß geschaltet wird.

2. Verfahren nach Patentanspruch 1, dadurch gekennzeichnet, daß die kurzzeitige Kennung aus einer Zeichenkombination besteht, die dem bei der Bildung der digitalen Übertragungssignale verwendeten Code nicht entspricht.

3. Verfahren nach Patentanspruch 2, dadurch gekennzeichnet, daß die Bildung der digitalen Übertragungssignale nach einem 4B/3T-Code erfolgt und als Zeichenkombination dreimal unmittelbar aufeinanderfolgend das im normalen Betrieb nicht verwendete Ternärwort ausgesendet wird.

4. Verfahren nach einem der vorhergehenden Patentansprüche, dadurch gekennzeichnet, daß das veränderte Ortungssignal zusätzlich zu der die kurzzeitige Kennung (K) bildenden Zeichenkombination eine zusätzliche Zeichenkombination enthält, deren Periode der der kurzzeitigen Kennung entspricht.

5. Verfahren nach Patentanspruch 4, dadurch gekennzeichnet, daß die zusätzliche Zeichenkombination der für die kurzzeitige Kennung verwendeten Zeichenkombination entspricht und in der zeitlichen Mitte zwischen zwei kurzzeitigen Kennungen in das Ortungssignal eingeblendet ist.

6. Verfahren nach Patentanspruch 4, dadurch gekennzeichnet, daß die zusätzliche Zeichenkombination eine gegenüber der für die kurzzeitige Kennung verwendeten Zeichenkombination vergleichsweise längere Dauer hat.

7. Verfahren nach Patentanspruch 6, dadurch gekennzeichnet, daß die Dauer der zusätzlichen Zeichenkombination wenigstens der zehnfachen Dauer der der kurzzeitigen Kennung entspricht.

8. Anordnung zur Durchführung eines Verfahrens nach einem der vorhergehenden Patentansprüche, in einem Zwischenregenerator mit zwei PCM-Regeneration (Reg1, Reg2), die jeweils einen eingangsseitigen Entzerrer (E1, E2), einen Amplituden- und Zeitregenerator (AZ1, AZ2) und einen ausgangsseitigen Verstärker (V1, V2) enthalten und bei denen der Ausgang des Regenerators (Reg1) in Ortungsrichtung über einen Schleifenschluß mit dem Eingang des Regenerators (Reg2) der Gegenrichtung verbindbar ist, dadurch gekennzeichnet, daß im Zwischenregenerator zusätzlich eine Steuereinheit (SE) vorgesehen ist, die potentialmäßig dem in Ortungsrichtung wirkenden Regenerator (Reg1) zugeordnet ist und deren Eingang mit einem Ausgang des Amplituden- und Zeitregenerators (AZ1) dieses Regenerators verbunden ist, daß der Verstärker (V1) dieses Regenerators zusätzlich eine Schaltung (AIE) zur Austastimpulseinblendung enthält, deren Eingang mit einem ersten Ausgang der Steuereinheit (SE) verbunden ist, daß der Entzerrer (E2) des Regenerators (Reg2) der Gegenrichtung zusätzlich einen, mit einem zweiten Ausgang der Steuereinheit (SE) hochfrequenzmäßig verbundene Schleifenbefehls empfänger (SBE) enthält, der einen im Entzerrer (E2) der Gegenrichtung enthaltenen Umschalter (U) zwischen Schleife und Übertragungsstrecke steuert, daß die Steuereinheit (SE) einen Kennungssignalempfänger (KE) enthält, dessen Eingang mit dem Eingang der Steuereinheit (SE) verbunden ist und dessen Ausgänge getrennt mit einem Austastimpulsgenerator (APG) und einem Zustandszählers (ZZ) verbunden sind, daß ein erster Ausgang des Zustandszählers (ZZ) mit einem zweiten Eingang des Austastimpulsgenerators (APG) und ein zweiter Ausgang des Zustandszählers mit dem Eingang eines Schleifenbefehlsgebers (SBG) verbunden ist, dessen Ausgang den zweiten Ausgang der Steuereinheit (SE) darstellt, während der Ausgang des Austastimpulsgenerators (APG) den ersten Ausgang der Steuereinheit (SE) darstellt.

## Revendications

1. Procédé pour localiser des défauts sans adresse au moyen d'une fermeture en boucle dans une voie de transmission d'informations pour la transmission de signaux d'informations numériques, à partir d'un poste terminal effectuant la localisation, par l'intermédiaire d'au moins un régénérateur régénérant et/ou amplifiant les signaux de transmission des deux directions de transmission et qui contient un commutateur de fermeture en boucle servant à relier la sortie du régénérateur pour une direction de transmission à l'entrée du régénérateur pour la direction opposée, et un commutateur qui relie l'entrée du régénérateur de la direction opposée à la boucle établie ou à la sortie de la voie de transmission de la direction opposée, et selon lequel pendant l'ensemble du processus de localisation de défauts, un signal unique de localisation est émis par le poste terminal effectuant la localisation, caractérisé par le fait que la signal de localisation, qui contient périodiquement un indicatif de brève durée, est émis à partir de l'état de fonctionnement, qu'après une durée d'idenfication (T1) tous les régénérateurs intermédiaires recevant ce signal de localisation sont placés dans un état préparatoire et qu'un compteur d'états (ZZ) est déclenché et que ces régénérateurs intermédiaires émettent un signal de localisation modifié de telle sorte que l'indicatif, qui y est en outre contenu, n'est plus identifiable en tant qu'indicatif pour un régénérateur intermédiaire récepteur et que ce régénérateur reste dans la plage de réglage de correction des distorsions et dans la plage de synchronisation de la boucle de régulation de phase, que les régénérateurs intermédiaires placés à l'état préparatoire et recevant le signal de localisation modifié sont ramenés dans l'état de fonctionnement après l'écoulement d'une durée d'arrêt correspondant approximativement à la durée d'identification (T1) qu'après l'écoulement de la durée d'arrêt, lors de l'interruption de l'émission du signal de localisation pendant une durée d'avance (T2) brève par rapport à la durée d'identification et d'arrêt, le régénérateur intermédiaire resté à l'état préparatoire est amené à l'état de fermeture de boucle, et que l'entrée du régénérateur de la direction opposée est isolée de sa voie de transmission de signaux montée en amont, qu'en outre le signal de localisation non modifié est envoyé au régénérateur intermédiaire disposé en aval dans la direction de localisation, que le compteur d'états (ZZ) avancé et que la fermeture en boucle établie reste conservée pendant la durée, dépassant la durée d'identification (T1) du signal de localisation non modifié, que lors d'une modification du signal de localisation, le compteur d'états (ZZ) situé dans le régénérateur intermédiaire comportant la fermeture en boucle est placé pendant la durée d'avance (T2) dans une position finale, que la fermeture en boucle est supprimée dans ce régénérateur intermédiaire et que le signal de localisation muni de son indicatif est transmis, sans modification, au régénérateur intermédiaire situé en aval dans la direction de localisation et que ce régénérateur est commuté dans l'etat de fermeture en boucle.

2. Procédé suivant la revendication 1, caractérisé par le fait que l'indicatif de brève durée est formée par une combinaison de caractères qui ne correspond pas au code utilisé lors de la formation de signaux numérique de transmission.

3. Procédé suivant la revendication 2, caractérisé par le fait que la formation des signaux de transmission numériques s'effectue selon un code 4B/3T et que le mot ternaire non utilisé dans le fonctionnement est émis directement successivement en trois fois en tant que combinaison de caractères.

4. Procédé suivant l'une des revendications précédentes, caractérisé par le fait que le signal de localisation modifié contient, en plus de la combinaison de caractères formant l'indicatif de brève durée

# 0 029 108

(K), une combinaison supplémentaire de caractères, dont le période correspond à celle de l'indicatif de brève durée.

5. Procédé suivant la revendication 4, caractérisé par le fait que la combinaison supplémentaire de caractères correspond à la combinaison de caractères utilisée pour l'indicatif de très brève durée et est introduit à mi-chemin dans le temps entre deux indicatifs de brève durée dans le signal de localisation.

6. Procédé suivant la revendication 4, caractérisé par le fait que la combinaison supplémentaire de caractères possède une durée comparativement plus longue que la combinaison de caractères utilisée pour l'indicatif de brève durée.

7. Procédé suivant la revendication 6, caractérisé par le fait que la durée de la combinaison supplémentaire de caractères correspond au moins à dix fois la durée de l'indicatif de brève durée.

8. Dispositif pour la mise en oeuvre du procédé suivant l'une des revendication précédentes, dans un régénérateur intermédiaire comportant deux régénérateurs MIC (Reg1, Reg2) qui contiennent chacun un correcteur de distorsions (E1, E2) situé du côté entrée, un régénérateur d'amplitude et de temps (AZ1, AZ2) et un amplificateur (V1, V2) situé du côté sortie et dans lesquels la sortie du régénérateur (Reg1) opérant dans la direction de localisation peut être reliée par l'intermédiaire d'une fermeture en boucle à l'entrée du générateur (Reg1) tra-opérant dans la direction opposée, caractérisé par le fait que dans le régénérateur intermédiaire est prévue en supplément une unité de commande (ST) qui est associée, du point du potentiel, au régénérateur (Reg1) agissant dans la direction de localisation dont l'entrée est reliée à une sortie de générateur d'amplitude et de temps (AZ1) de ce régénérateur, que l'amplificateur (V1) de ce régénérateur contient en outre un circuit (AIE) servant à l'injection d'impulsions de supression et dont l'entrée est reliée à une premiére sortie de l'unité de commande (SP), que le correcteur de distorsions (E2) du régénérateur (Reg2) travaillant suivant la direction opposée contient en supplément un récepteur (SBE) d'instructions de boucle relié du point de vue des hautes fréquences à une seconde sortie de l'unité de commande (SE) et qui commande un commutateur (U) contenu dans le correcteur de distorsions (E2) opérant dans le direction opposée, entre la boucle et la voie de transmission, que l'unité de commande (SE) contient un récepteur (KE) de signaux indicatifs, dont l'entrée est reliée à l'entrée de l'unité de commande (ST) et dont les sorties sont reliées séparément à un générateur (APG) d'impulsions de suppression et à un compteur d'états (ZZ), qu'une première sortie du compteur d'états (ZZ) est reliée à une seconde entrée du générateur (APG) d'impulsions de suppression et qu'une seconde sortie du compteur d'états est reliée à l'entrée d'un générateur (SBG) d'instructions de boucle, dont la sortie représente la seconde sortie de l'unité de commande (ST), tandis que la sortie du générateur (APG) d'impulsions de suppression représente la première sortie de l'unité de commande (SE).

## Claims

1. A process for address-free (symbolic) fault location by means of a loop closure in a communications transmission link for the transmission of digital communication signals from a locating end station via at least one intermediate regenerator which regenerates and/or amplifies the transmission signals in both directions of transmission and which contains a loop closure switch which serves to connect the output of the regenerator for one direction of transmission to the input of the regenerator for the opposite direction and further contains a change-over switch which connects the input of the regenerator of the opposite direction to the connected loop or to the output of the transmission link of the opposite direction, wherein the locating end station transmits one single locating signal during the entire fault locating process, characterised in that commencing from the operating state, the locating signal transmitted periodically contains a code of short duration, that following a recognition time (T1) all the intermediate regenerators which receive this locating signal assume a preparation state in which a state counter (ZZ) is released and these intermediate regenerators emit a locating signal which has been modified in such a manner that the code which is still contained therein can no longer be recognised as a code by a receiving intermediate regenerator and the latter remains in the equalizer control zone and in the synchronization zone of the phase control loop, that the intermediate regenerators which have been switched into the preparation state and which receive the modified locating signal switch back to the operating state following a hold time which corresponds approximately to the recognition time (T1), and that at the end of the hold time, in the event of an interruption in the transmission of the locating signal for a step-on time (T2) which is short in comparison to the recognition- and hold time, the intermediate regenerator which has remained in the preparation state is switched into the loop closure state and the input of the regenerator for the opposite direction is cut off from its preceding signal path, and in addition the unchanged locating signal is transmitted to the intermediate regenerator which follows in the locating direction, the state counter (ZZ) is switched on, and the switched loop closure is retained for the duration of the unmodified locating signal, which exceeds the recognition time (T1), that in the event of a further change in the locating signal for the step-on time (T2) the state counter (ZZ) in the intermediate regenerator with loop closure is switched into an end position, the loop closure in this intermediate regenerator is discontinued, and the locating signal is transmitted with its code unchanged to the intermediate

8

regenerator with follows in the locating direction and this intermediate regenerator is switched into the loop closure state.

2. A process as claimed in Claim 1, characterised in that the code of short duration consists of a character combination which does not correspond to the code used to form the digital transmission signals.

3. A process as claimed in Claim 2, characterised in that the digital transmission signals are formed in accordance with a 4B/3T code and by way of character combination the ternary word which is not used in normal operation is transmitted three times in direct succession.

4. A process as claimed in one of the preceding claims, characterised in that in addition to the character combination which forms the code (K) of short duration the modified locating signal contains an additional character combination the period of which corresponds to the code of short duration.

5. A process as claimed in Claim 4, characterised in that the additional character combination corresponds to the character combination used for the code of short duration, and is gated into the locating signal at a point in time corresponding to midway between two codes of short duration.

6. A process as claimed in Claim 4, characterised in that the additional character combination possesses a duration which is comparatively longer than the character combination used for the code of short duration.

7. A process as claimed in Claim 6, chracterised in that the duration of the additional character combination corresponds to at least ten times the duration of the code of short duration.

8. An arrangement for the implementation of a process as claimed in one of the preceding claims, in an intermediate regenerator having two PCM regenerators (Reg1, Reg2), each of which contains an input-end equalizer (E1, E2), an amplitude- and time-regenerator (AZ1, AZ2), and an output-end amplifier (V1, V2), and wherein the output of the regenerator (Reg1) in the locating direction can be connected via a loop closure to the input of the regenerator (Reg2) of the opposite direction, characterised in that the intermediate regenerator additionally contains a control unit (SE) which is assigned in terms of potential to the regenerator (Reg1) which operates in the locating direction and whose input is connected to the output of the amplitude- and time regenerator (AZ1) of this regenerator, that the amplifier (E1) of this regenerator additionally contains a circuit (A1E) for the gating in of blanking pulses, the input of which is connected to a first output of the control unit (SE), that the equalizer (E2) of the regenerator (Reg2) which serves the opposite direction additionally contains a loop command receiver (SBE) which is connected to a second output of the control unit (SE) for high frequencies and which controls a change-over switch (U) contained in the equalizer (E2) which serves the opposite direction between loop and transmission link, that the control unit (SE) contains a code signal receiver (KE) whose input is connected to the input of the control unit (SE) and whose outputs are separately connected to a blanking pulse generator (APG) and a state counter (ZZ), and a first output of the state counter (ZZ) is connected to a second input of the blanking pulse generator (APG), and a second output of the state counter is connected to the input of a loop command generator (SBG) whose output represents the second output of the control unit (SE), whereas the output of the blanking pulse generator (APG) represents the first output of the control unit (SE).

FIG 1

FIG 2

FIG 3

1